# EUROPEAN PATENT APPLICATION

(11) **EP 4 378 316 A1**
(43) Date of publication of application: **05.06.2024**
(21) Application number: 22210638.7
(22) Date of filing: 30.11.2022
(51) Int. Cl.: A23C 3/033, A23C 3/037, A23L 2/46

(54) **METHOD AND SYSTEM FOR HEAT TREATING A LIQUID FOOD PRODUCT**

(71) Applicant: Tetra Laval Holdings & Finance S.A., 1009 Pully (CH)
(72) Inventor: EDÉN, Jonas, 221 86 Lund (SE); VESTBERG, Staffan, 221 86 Lund (SE); PANTZAR, Göran, 221 86 Lund (SE)
(74) Representative: Tetra Pak - Patent Attorneys SE

(57) **Abstract**

A method (300), and the corresponding system, for heat treating a liquid food product LP in a food processing system (200), said food processing system comprising, as seen in a flow direction of the LP, an indirect heating device (202), a holding cell (206), a direct heating device (204) and a cooling arrangement (214). The method comprises heating the LP with the indirect heating device to a temperature between 70 °C and 80 °C, holding the LP in the holding cell for at least 10 seconds, such that the LP is pasteurized, heating the LP with the direct heating device to a temperature of at least 120 °C, such that the shelf life of the LP is extended, and cooling the LP with the cooling arrangement, such that the LP is held above 120 °C for at most 5 seconds.

## Description

### Technical Field

The invention generally relates to food processing. More particularly, it is related to heat treatment of liquid food products, such as milk.

### Background Art

Today, it is well known in the liquid food processing area that bacteria, germs, spores, moulds and other microorganisms can be destroyed or deactivated by using heat treatment. For instance, it is today common in dairies to have heat exchangers arranged to heat dairy products such as milk to about 72 °C for about 15 to 20 seconds, which is often referred to as milk pasteurization. This provides a food product that is safe to consume and offers an extended shelf life. In addition to pasteurization, it is also well known to use ultra-high-temperature (UHT) processing to remove unwanted microorganisms from the milk. In UHT processing systems, it is common that the food product is heated to 135 °C for 2 to 5 seconds.

In the systems commonly used today for UHT processing, milk or other liquid food product is often first pre-heated by using an indirect heating device, such as a plate heat exchanger. After being pre-heated, the food product is fed to a direct heating device, such as a steam injection device. A holding cell is placed downstream the direct heating device to assure that the temperature of the food product is maintained above a pre-set, minimum temperature for a pre-set period of time. By using the holding cell, it is possible to assure that the microorganisms are killed off such that the food product is safe to consume. In addition, by controlling temperature and time, it is also possible to provide consistent food quality.

Present UHT processing systems and other types of systems used for heat treating liquid food products are successfully used for delivering food products with consistent quality that are safe to consume. However, there is still a need for systems and methods that can offer or even prolong the shelf-life of a food product, without seriously affecting the properties of the food product due to effects caused by the heat treatment.

### Summary

It is an object of the invention to at least partly overcome one or more of the above-identified limitations of the prior art. In particular, it is an object to provide a method and a system that can heat treat liquid food products such that these are safe to consume, that is, reducing, deactivating or destroying pathogens or other unwanted microorganisms, with a consistent quality, while still subjecting the food products to excessive chemical changes caused by the heat treatment.

According to a first aspect it is provided a method for heat treating a liquid food product LP in a food processing system, said food processing system comprising, as seen in a flow direction of the LP, an indirect heating device, a holding cell, a direct heating device and a cooling arrangement, said method comprising, heating the LP with the indirect heating device to a temperature between 70 °C and 80 °C, holding the LP in the holding cell for at least 10 seconds, such that the LP is pasteurized, heating the LP with the direct heating device to a temperature of at least 120 °C, such that the shelf life of the LP is extended, and cooling the LP with the cooling arrangement such that the LP is held above 120 °C for at most 5 seconds.

An advantage with the method is that the heat treatment taking place in the direct heating device and in subsequent steps do not need to take into account any effects that heat treatment may have on microbiological deactivation, i.e. destroying or deactivating microorganisms harmful to a consumer. Put differently, it is provided for that the LP is safe to consume after being held in in the holding cell following the indirect heating device. The heat treatment taking place in the direct heating device can then be configured to extend shelf life as much as possible, while still assuring that product taste and flavor is not severely affected due to the direct heating. Thus, extension of shelf life can be optimized by taking into account only the effect the direct heating has on product taste and flavor. When performing the heat treatment with the direct heating device, no consideration must be done in respect of what microbiological deactivation is accomplished by the direct heating. Basically, the indirect heating may be used only for extending the shelf life of the food product.

The indirect heating device may be a heat exchanger using a heat transfer medium for heating the LP, and the direct heating device may be a steam injection device or a steam infusion device. Using the heat exchanger for heat treating the LP in a first stage is advantageous in that the heating can be made in an energy efficient manner. Using steam S for heating the LP in a second stage comes with the advantage that the LP can be rapidly heated. By rapidly heating the LP, less chemical changes of the LP may occur.

The cooling arrangement may comprise a flash pipe that has an expansion section with an expanding cross-sectional area, and the cooling of the LP may comprise feeding the LP through the expansion section such the pressure of the LP is reduced and at least part of the LP is vaporized. Using flash evaporation for lowering the temperature of the LP provides for that the cooling of the LP can be made rapidly, thereby reducing chemical changes that otherwise may occur (e.g. change in taste and flavor).

The cooling arrangement may comprise a flash vessel having an inlet that is connected to the flash pipe, the inlet having an expanding cross-sectional area, wherein the smallest cross-sectional area of the inlet is same or greater than the greatest cross-sectional area of the flash pipe, and the cooling of the LP may comprise feeding the LP into the flash vessel from the flash pipe, such the pressure of the LP is further reduced and additional vaporization of the LP is provided. By having an expansion section in the flash pipe followed by the flash vessel provides for that efficient cooling of the LP can be achieved.

A distance from the direct heating device to the expansion section in the flash pipe may be, as seen along a flow path of the LP, less than 0.5 m. An advantage with having a short distance, such as less than 0.5 m, is that the LP can be cooled down quickly. In case the distance is 0.5 m and a flow rate is 2 m/s, the LP is only held for 0.25 seconds before being cooled down due to the flash evaporation triggered by the expansion section of the flash pipe.

The cooling may comprise cooling the LP such that the LP is held above 120 °C for at most 0.2 seconds. By using steam for heating and the flash pipe and/or the flash vessel for cooling the LP, it is made possible to heat treat in the second stage at a high temperature, e.g. 120 °C or above, for a short period of time, e.g. at most 0.2 seconds.

The holding of the LP in the holding cell may comprise determining whether the LP has been pasteurized. The determining whether the LP has been pasteurized may comprise receiving temperature data from a temperature transmitter configured to measure a temperature of the LP in the holding cell, and receiving flow data from a flow transmitter configured to measure a flow rate of the LP in the holding cell.

The temperature transmitter arrangement may comprise a first temperature transmitter and a second temperature transmitter, wherein the receiving the temperature data may comprise receiving first temperature data from the first temperature transmitter arranged in to measure a temperature of the LP the holding cell, and receiving second temperature data from the second temperature transmitter configured to measure a temperature of the LP in the holding cell, wherein the second temperature transmitter may be placed downstream the first temperature transmitter. An advantage with having the first and second temperature transmitter is that it can be assured that the temperature is maintained throughout the holding cell.

According to a second aspect it is provided a food processing system for heat treating a liquid food product LP, said food processing system comprising, as seen in a flow direction of the LP, an indirect heating device arranged to heat the LP to a temperature between 70 °C and 80 °C, a holding cell arranged to hold the LP for at least 10 seconds, such that the LP is pasteurized, a direct heating device arranged to heat the LP to a temperature of at least 120 °C, such that the shelf life of the LP is extended, and a cooling arrangement arranged to cool the LP with the cooling arrangement, such that the LP is held above 120 °C for at most 5 seconds.

The same advantages and features as presented above with respect to the first aspect also apply to this second aspect.

The system may further comprise a control unit comprising a processor and a memory, a temperature transmitter arrangement arranged in the holding cell and configured to transmit temperature data to the control unit, a flow transmitter configured to measure a flow rate in the holding cell and to transmit flow data to the control unit, wherein the control unit may be configured to determine whether the LP has been pasteurized based on the temperature data and the flow data.

The temperature transmitter arrangement may comprise a first temperature transmitter and a second temperature transmitter, wherein the second temperature transmitter may be placed downstream the first temperature transmitter, wherein the first temperature transmitter may be arranged to transmit first temperature data and the second temperature transmitter may be arranged to transmit second temperature data, wherein the temperature data may comprise the first and second temperature data.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a general illustration of a heat treatment system with a holding cell arranged downstream an indirect heating device.
Fig. 2 is a general illustration of a heat treatment system with a holding cell arranged upstream an indirect heating device.
Fig. 3 is a flow chart illustrating a method for heat treating a liquid food product.

### Detailed Description

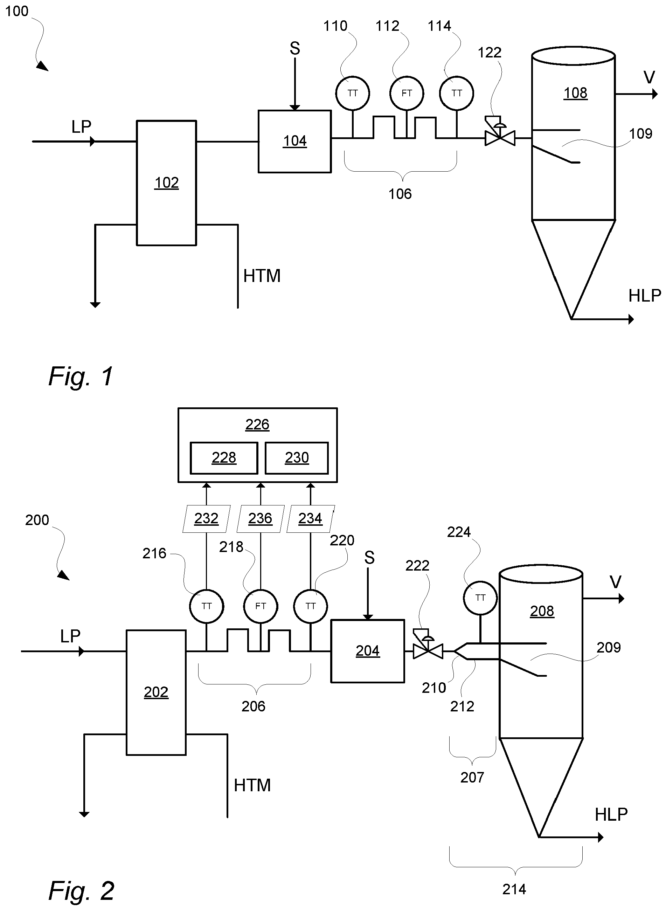

Fig. 1 generally illustrates a food processing system 100 arranged for heat treating a liquid food product LP, such as milk. As illustrated, the LP can be fed into an indirect heating device 102, such as a plate heat exchanger. To be able to heat the LP, a heat transfer medium HTM can be provided to the indirect heating device 102. In the indirect heating device 102, the LP is typically heated to about 50 °C for accomplishing preheating before subsequent treatment of the food product is performed.

After the LP has been heated in the indirect heating device 102, this can be fed into a direct heating device 104, such as a direct steam injection device. By injecting steam S into the LP the temperature of the LP can be additionally increased. For instance, in the direct heating device 104, the temperature of the LP can be increased to about 135 - 138 °C. To assure that the LP is kept at a certain temperature for a certain period of time, e.g. 135 °C for 2 to 5 seconds, a holding cell 106 can be placed downstream the direct heating device 104. By holding the LP at this certain temperature and time period, it can be assured that the LP is treated such that so called ultra-high temperature (UHT) heat treatment is performed.

Downstream the holding cell 106, a flash vessel 108 can be placed. By inserting a heat treated liquid food product HLP, that is, the LP after this has been subjected to heat treatment in the indirect heating device 102, the direct heating device 104 and the holding cell 106, into the flash vessel 108 via a flash vessel expansion inlet 109, a sudden pressure drop can be provided. This pressure drop provides for that so-called flash evaporation occurs, which in turn provides for that the HLP is cooled down quickly. In addition to that the HLP is cooled, the flash evaporation also results in that vapor V is formed.

To provide for that the LP is held at a pre-set temperature and time, a first and a second temperature transmitter 110, 112 can be provided in combination with a flow transmitter 112. As illustrated, the first temperature transmitter 110 can be placed upstream the second temperature transmitter 114 such that temperature measurements can be made at two points of the holding cell 106. Since a pipe length of the holding cell 106 is known, the time the LP is kept in the holding cell 106 can be determined based on a flow measurement provided by the flow transmitter 112. Basically, a holding cell is a conventional component, often having the form of a pipe that has a given length and given cross-sectional through flow area. By using the flow transmitter, it possible to determine how long it takes for the food product to pass from the point where the first temperature transmitter 110 measures, to the point where the second temperature transmitter 114 measures. It is then possible to ensure that the product has maintained the desired temperature for the desired period od time, as required for obtaining the needed heat treatment.

A back pressure valve 122 can be provided downstream the holding cell 106 and upstream the flash vessel 108. By having this back pressure valve 122, the LP is prevented from moving from the flash vessel 108 into the holding cell 106. The back pressure valve 122 may be a valve of any type that is suitable for creating a backpressure. Even though not illustrated, in addition to the back pressure valve 122 a throttling valve can be provided. The back pressure valve 122 and the throttling valve may be one and the same valve.

Fig. 2 illustrates a food processing system 200 by way of example. The food processing system 200 of fig. 2 is arranged to receive the LP and to heat treat this in an indirect heating device 202 by using a heat transfer medium HTM. However, in contrast to the food processing system 100 illustrated in fig. 1, the food processing system 200 is arranged to feed the LP from the indirect heating device 202 to a holding cell 206 and from the holding cell 206 to a direct heating device 204 instead of, as is the case for the food processing system 100 of fig. 1, to feed the LP from the indirect heating device 102 to the direct heating device 104 and thereafter to the holding cell 106. By having the holding cell 206 placed downstream the indirect heating device 202 and upstream the direct heating device 204, it is possible to assure that the LP is kept at a pre-determined temperature for a pre-determined period of time, e.g. 72 °C for 15 seconds for milk, to assure that the microorganisms that may be harmful to a consumer are destroyed or deactivated. A temperature of 72 °C and a time of 15 seconds represent values that are typically used for accomplishing pasteurization. The indirect heating device 202 and the holding cell 206 may thus be configured for performing pasteurization of the food product.

A benefit of assuring that the LP is safe to consume before the LP is heated in the direct heating device 204 is that the heat treatment performed in the direct heating device 204 can be configured to meet demands related to shelf life and product properties without taking into consideration the food safety aspect. Put differently, since heating the LP does not only result in microbiological inactivation, i.e. destroying or deactivating microorganisms, but also in chemical changes, i.e. changed product properties, e.g. color change or taste change, the food processing system 200 provides for an increased degree of freedom when configuring the direct heating device 202 compared to the food processing system 100 illustrated in fig. 1.

By way of example, the direct heating device 202 may be arranged to heat the LP to 145 °C for 0.2 seconds. A positive effect of having the time set to 0.2 seconds is that the chemical changes caused by the heat load subjected to the LP can be reduced. A possible problem from a food safety perspective with such short time period is that measuring accurately is more difficult. However, by having the holding cell 206 placed upstream the direct heating device 204, as illustrated in fig. 2, the food safety aspect is already taken care of and, as an effect, possible difficulties in assuring that the LP is kept at 145 °C for 0.2 seconds do not need to hinder the use of this temperature and time combination. Even though exemplified herein by the time period of 0.2 second, this is generally true for time periods being so short that a responsiveness of the temperature transmitter may cause a problem in terms of assuring that this time period has been fulfilled.

The food processing system 200 can further comprise a flash vessel 208 provided with a flash vessel inlet 209. Upstream the flash vessel inlet 209, a flash pipe 207 can be provided. The flash pipe 207 may comprise an expansion section 210, that is, a section of the flash pipe 207 in which a cross sectional area is increased, e.g. by increasing a radius. Downstream the expansion section 210, the flash pipe 207 may comprise a constant section 212, that is, a section of the flash pipe 207 with a constant cross-sectional area. The flash pipe 207 and the flash vessel 208 both serve the purpose of cooling the LP by using flash evaporation, and the two can in combination be referred to as a cooling arrangement 214. When the food product LP has entered the cooling arrangement 214, it is referred to as heat treated liquid food product HLP. In addition to cooling the LP, the flash vessel 208 is arranged such that vapor V can be separated from the heat treated liquid food product HLP. Using a flash pipe in addition to a flash vessel enables much faster cooling of the LP.

The holding cell 206, placed downstream the indirect heating device 202 and upstream the direct heating device 204, which may be a steam injection device or a steam infusion device, may comprise a first temperature transmitter 216, a flow transmitter 218 and a second temperature transmitter 220. The first temperature transmitter 216 may be placed upstream the second temperature transmitter 220 such that temperature measurements can be made at two different points of the holding tube 206, thereby capturing any temperature decrease that may occur. A temperature transmitter 224 may also be placed in the flash pipe 207, more particularly the constant section 212 of the flash pipe 207. By having the temperature transmitter 224 in the flash pipe 207, it can be assured that the LP has been heated according to pre-set conditions in the direct heating device 204. Although illustrated that in total three temperature transmitters 216, 220, 224 are used, additional temperature transmitters can be added in case there is a need to more closely follow the temperature of the LP throughout the food processing system 200.

To provide for that there is a sudden pressure drop and that the LP is not moved from the flash pipe 207 into the direct heating device 204, a back pressure valve 222 can be provided downstream the direct heating device 204 and upstream the flash pipe 207. The back pressure valve 222 may be a valve of any type that is suitable for creating a backpressure. The back pressure valve 222 may be complemented with a throttling valve or the back pressure valve and the throttling valve may be combined into one and the same valve.

A control unit 226 comprising a processor 228 and a memory 230 can be provided. The control unit 226 can be arranged to receive first temperature data 232 from the first temperature transmitter 216, second temperature data 234 from the second temperature transmitter 220 and flow data 236 from the flow transmitter 218. By using the first and second temperature data 232, 234 and the flow data 236, the control unit 226 may determine whether the LP has been pasteurized. By knowing the flow data 236 and a pipe length of the holding cell 206, the time the LP is kept in the holding cell 206 can be determined.

Even though a product flow rate may be different for different food processing systems, the product flow rate may be in the range 1.5 to 2 m/s in the direct heating device 204. The heating provided by the direct heating device 204 may last less than 5, 3, 2, 1, 0.5 or 0.3 seconds, or even less than 0.1 seconds. Basically, the closer the flash pipe 207 and/or flash vessel 208 is located to indirect heating device 204, the shorter the heating lasts, i.e. the faster is the LP cooled. This means that the cooling arrangement 214 may be arranged to cool the LP such that the LP is held above a given temperature, such as 120 °C, for at most 5, 3, 2, 1, 0.5 or 0.3 second, or even at most 0.1 seconds.

The temperature used in the direct heating device 204 may be at least 120 °C, more particularly at least 130 °C, even more particularly at least 140 °C, more precisely at least 150 °C.

In the flash pipe 207, the flow rate may be, for example, in the range 80 to 100 m/s.

The LP may be chosen from the group comprising milk, flavored milk, enriched and fortified milk product, fermented milk product, cream, dairy desserts, juice, plant based beverages such as oat milk, soy milk, rice milk, etc.

The food processing system 200 may between the direct heating device 204 and the flash pipe 207 be void of holding cells. The food processing system 200 may between the direct heating device 204 and the cooling arrangement 214 be void of holding cells.

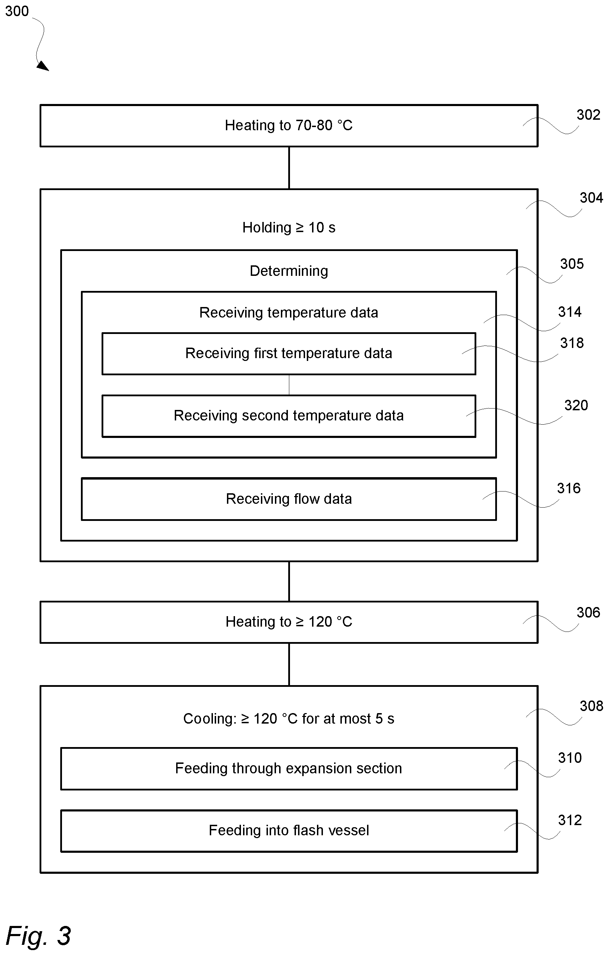

Fig. 3 is a flowchart illustrating a method 300 for heat treating the LP in the food processing system 200. In a first step 302, the LP can be heated to a temperature between 70 °C and 80 °C. In a second step 304, the LP can be held for at least 10 seconds such that the LP is pasteurized. In a third step 306, the LP can be heated with the direct heating device 204 to a temperature of at least 120 °C such that the shelf life of the LP is extended. In a fourth step 308, the LP can be cooled with the cooling arrangement 214 such that the LP is held above 120 °C for at most 5 seconds.

Optionally, the second step 304 may comprise a sub-step 305 of determining whether the LP has been pasteurized.

Optionally, the fourth step 308 may comprise a sub-step 310 of feeding the LP through the expansion section 210 of the flash pipe 207.

Optionally, the fourth step 308 may also comprise a sub-step 312 of feeding the LP into the flash vessel 208 from the flash pipe 207 such that the pressure of the LP is further reduced and additional vaporization of the LP is provided.

The sub-step 305 of determining whether the LP has been pasteurized may in turn comprise a sub-step 314 of receiving temperature data 232, 234 from a temperature transmitter arrangement 216, 220, which may comprise the first temperature transmitter 216 and/or the second temperature transmitter 220, and a sub-step 316 of receiving the flow data 236 from the flow transmitter 218 arranged in the holding cell 206. In case the temperature transmitter arrangement comprises the first and second temperature transmitter 216, 220, the sub-step 314 may comprise a sub-step 318 of receiving the first temperature data 232 from the first temperature transmitter 216, and a sub-step 320 of receiving the second temperature data 234 from the second temperature transmitter 220.

The method 300 may be performed by using any one of the ranges, values and other features mentioned in relation to the food processing system 200 described above.

From the description above follows that, although various embodiments of the invention have been described and shown, the invention is not restricted thereto, but may also be embodied in other ways within the scope of the subject-matter defined in the following claims.

## Claims

1. A method (300) for heat treating a liquid food product LP in a food processing system (200), said food processing system (200) comprising, as seen in a flow direction of the LP, an indirect heating device (202), a holding cell (206), a direct heating device (204) and a cooling arrangement (214), said method comprising,
heating (302) the LP with the indirect heating device (202) to a temperature between 70 °C and 80 °C,
holding (304) the LP in the holding cell (206) for at least 10 seconds, such that the LP is pasteurized,
heating (306) the LP with the direct heating device (204) to a temperature of at least 120 °C, such that the shelf life of the LP is extended, and
cooling (308) the LP with the cooling arrangement (214), such that the LP is held above 120 °C for at most 5 seconds.

2. The method according to claim 1, wherein the indirect heating device (202) is a heat exchanger using a heat transfer medium (HTM) for heating the LP, and the direct heating device (204) is a steam injection device or a steam infusion device.

3. The method according to claim 1 or 2, wherein
the cooling arrangement (214) comprises a flash pipe (207) that has an expansion section (210) with an expanding cross-sectional area, and
the cooling (308) of the LP comprises feeding (310) the LP through the expansion section (210) such the pressure of the LP is reduced and at least part of the LP is vaporized.

4. The method according to claim 3, wherein
the cooling arrangement (214) comprises a flash vessel (208) having an inlet (209) that is connected to the flash pipe (207), the inlet (209) having an expanding cross-sectional area, wherein the smallest cross-sectional area of the inlet (209) is same or greater than the greatest cross-sectional area of the flash pipe (207), and
the cooling (308) of the LP comprises feeding (312) the LP into the flash vessel (208) from the flash pipe (207), such the pressure of the LP is further reduced and additional vaporization of the LP is provided.

5. The method according to claim 3 or 4, wherein a distance from the direct heating device (204) to the expansion section (210) in the flash pipe (207) is, as seen along a flow path of the LP, less than 0.5 m.

6. The method according to any one of the preceding claims, wherein the cooling (308) comprises cooling the LP such that the LP is held above 120 °C for at most 0.2 seconds

7. The method according any one of the preceding claims, wherein the holding (304) of the LP in the holding cell (206) comprises determining (305) whether the LP has been pasteurized.

8. The method according any one of the preceding claims, wherein the determining (305) whether the LP has been pasteurized comprises
receiving (314) temperature data (232, 234) from a temperature transmitter arrangement (216, 220) configured to measure a temperature of the LP in the holding cell (206), and
receiving (316) flow data (236) from a flow transmitter (218) configured to measure a flow rate of the LP in the holding cell (206).

9. The method according to claim 8, wherein the temperature transmitter arrangement (216, 220) comprises a first temperature transmitter (216) and a second temperature transmitter (220), wherein the receiving (314) the temperature data (232, 234) comprises
receiving (318) first temperature data (232) from the first temperature transmitter (216) configured to measure a temperature of the LP in the holding cell (206), and
receiving (320) second temperature data (234) from the second temperature transmitter (220) configured to measure a temperature of the LP in the holding cell (206), wherein the second temperature transmitter (220) is placed downstream the first temperature transmitter (216).

10. A system (200) for heat treating a liquid food product LP, said food processing system (200) comprising, as seen in a flow direction of the LP,
an indirect heating device (202) arranged to heat the LP to a temperature between 70 °C and 80 °C,
a holding cell (206) arranged to hold the LP for at least 10 seconds, such that the LP is pasteurized,
a direct heating device (204) arranged to heat the LP to a temperature of at least 120 °C, such that the shelf life of the LP is extended, and
a cooling arrangement (214) arranged to cool the LP with the cooling arrangement (214), such that the LP is held above 120 °C for at most 5 seconds.

11. The food processing system according to claim 10, further comprising
a control unit (226) comprising a processor (228) and a memory (230),
a temperature transmitter arrangement (216, 220) configured to measure a temperature of the LP in the holding cell (206) and to transmit temperature data (232, 234) representing the temperature to the control unit (226),
a flow transmitter (218) configured to measure a flow rate of the LP in the holding cell (206) and to transmit flow data (236) representing the flow rate to the control unit (226),
wherein the control unit (226) is configured to determine whether the LP has been pasteurized based on the temperature data (232, 234) and the flow data (236).

12. The food processing system according to claim 11, wherein the temperature transmitter arrangement (216, 220) comprises
a first temperature transmitter (216) and
a second temperature transmitter (220),
wherein the second temperature transmitter (220) is placed downstream the first temperature transmitter (216),
wherein the first temperature transmitter (216) is arranged to transmit first temperature data (232) and the second temperature transmitter (220) is arranged to transmit second temperature data (234),
wherein the temperature data (232, 234) comprises the first and second temperature data (232, 234).
